# FASCICULE DE BREVET EUROPEEN

(11) **EP 2 984 385 B1**
(45) Date de publication et mention de la délivrance du brevet: **10.05.2017**
(21) Numéro de dépôt: 14720184.2
(22) Date de dépôt: 03.04.2014
(51) Int. Cl.: F17C 7/02, F02M 21/02, F02M 21/06

(54) **PROCEDE ET SYSTEME DE TRAITEMENT ET D'ACHEMINEMENT DE GAZ NATUREL VERS UN EQUIPEMENT DE PRODUCTION D'ENERGIE POUR LA PROPULSION D'UN NAVIRE**
VERFAHREN UND SYSTEM ZUR BEHANDLUNG UND ZUFUHR VON ERDGAS IN EINER VORRICHTUNG ZUR ENERGIEERZEUGUNG ZUM BEWEGEN EINES SCHIFFES
METHOD AND SYSTEM FOR TREATING AND FEEDING NATURAL GAS TO AN APPARATUS FOR GENERATING POWER IN ORDER TO PROPEL A SHIP

(30) Priorité: 11.04.2013 FR 1353257
(43) Date de publication de la demande: 17.02.2016
(73) Titulaire: GAZTRANSPORT ET TECHNIGAZ, 78470 Saint Rémy Lès Chevreuse (FR)
(72) Inventeur: LE BRUCHEC, Pierre, F-78120 Rambouillet (FR); DENIER-GUENEGOU, Anaïs, F-44360 Saint Etienne de Montluc (FR); GUERNEC, Loïc, F-78310 Maurepas (FR); SPITTAEL, Laurent, F-78960 Voisins le Bretonneux (FR); BEAUVAIS, David, F-92400 Courbevoie (FR); HUCHET, Jérôme, F-44620 Savenay (FR); DIOUF, Abdoulaye, F-92160 Antony (FR)
(74) Mandataire: Loyer & Abello
(86) Numéro de dépôt international: PCT/FR2014/050804
(87) Numéro de publication internationale: WO 2014/167219

(56) Documents cités:
- DE-A1-102007 042 158
- JP-A- 2004 099 718
- US-A1- 2007 175 226
- US-A1- 2007 199 496
- US-A1- 2009 126 400
- US-A1- 2009 199 909

## Description

### Domaine technique

L'invention se rapporte au domaine des navires propulsés au gaz naturel.

L'invention se rapporte plus particulièrement à un procédé et à un système de traitement et d'acheminement de gaz naturel depuis une cuve de stockage de gaz liquéfié vers un équipement de production d'énergie, tel qu'un moteur thermique à explosion.

### Arrière-plan technologique

Dans l'état de la technique et notamment dans le document DE102007042158, il est connu des navires comportant des moteurs thermiques à explosion alimentés en gaz naturel et permettant d'assurer leur propulsion. Afin d'assurer un bon fonctionnement de tels moteurs à explosion, le gaz naturel combustible doit présenter certaines propriétés. En particulier, l'indice de méthane doit être supérieur à un seuil, généralement défini par le constructeur du moteur, car les gaz présentant de trop faibles indices de méthane présentent une combustion anormale entrainant un phénomène de cliquetis.

Afin de garantir que le gaz naturel alimentant le moteur présente un indice de méthane supérieur à un seuil, il est connu d'équiper le circuit d'alimentation dudit moteur d'un séparateur de phases permettant de retourner, sous forme de condensat, vers la cuve de stockage, les hydrocarbures lourds du gaz naturel.

Toutefois, le retour des hydrocarbures lourds conduit à leur accumulation dans la cuve. Ainsi, lorsque le niveau de la cuve approche du fond, il demeure un reliquat d'hydrocarbures lourds inutilisables pour la propulsion du navire.

### Résumé

Une idée à la base de l'invention est de proposer un procédé et un système de traitement et d'acheminement de gaz naturel d'une cuve de stockage de gaz liquéfié vers un équipement de production d'énergie, tel qu'un moteur thermique à explosion, pour la propulsion d'un navire permettant de résoudre les problèmes de concentration d'hydrocarbures lourds en fond de cuve.

Selon un mode de réalisation, l'invention fournit un procédé de traitement et d'acheminement de gaz naturel, dans un navire, depuis une cuve de stockage de gaz liquéfié vers un équipement de production d'énergie, d'une part, et vers un brûleur d'une installation de production d'énergie, d'autre part, ledit procédé prévoyant successivement :
- une étape d'alimentation de l'équipement de production d'énergie pendant laquelle l'on conduit du gaz naturel au travers un séparateur de phases permettant de retourner, vers la cuve, sous forme de condensat, une fraction lourde du gaz naturel comportant les hydrocarbures présentant la chaîne carbonée la plus longue et de conduire vers l'équipement de production d'énergie une fraction légère du gaz naturel comportant les hydrocarbures présentant la chaine carbonée la plus courte; puis
- une étape de valorisation de la fraction lourde du gaz naturel pendant laquelle l'on conduit du gaz naturel de la cuve vers le brûleur en court-circuitant ledit séparateur de phases.

Ainsi, en court-circuitant le séparateur de phases, la fraction lourde du gaz naturel peut être éliminée en la valorisant dans une installation de production d'énergie équipée d'un brûleur.

Selon des modes de réalisation, un tel procédé peut comporter une ou plusieurs des caractéristiques suivantes :
- le procédé prévoit de contrôler une variable représentative de l'indice de méthane du gaz naturel acheminé, pendant une étape d'alimentation de l'équipement de production d'énergie.
- le procédé prévoit de passer automatiquement à l'étape de valorisation de la fraction lourde du gaz naturel et/ou de générer un signal d'alarme lorsque la variable représentative de l'indice de méthane du gaz naturel acheminé dépasse un seuil.
- la variable représentative de l'indice de méthane du gaz naturel acheminé est déterminée par mesure du débit de la fraction légère du gaz naturel en aval du séparateur de phase et/ou par mesure de la température de gaz naturel évaporé, collecté dans la cuve et/ou par mesure du niveau et/ou de la fréquence de purge d'un récipient de récupération des condensats..

Selon un mode de réalisation, l'invention fournit aussi un système, embarqué à bord d'un navire, de traitement et d'acheminement de gaz naturel depuis une cuve de stockage de gaz liquéfié vers un équipement de production d'énergie, d'une part, et vers un brûleur d'une installation de production d'énergie, d'autre part, le système comportant :
- un premier circuit d'alimentation de l'équipement de production d'énergie, ledit premier circuit étant équipé d'un séparateur de phases connecté, en aval, d'une part, à un conduit de retour permettant de retourner, sous forme de condensat, vers la cuve, une fraction lourde du gaz naturel comportant les hydrocarbures présentant la chaîne carbonée la plus longue et, d'autre part, à un conduit d'amenée vers l'équipement de production d'énergie permettant de conduire une fraction légère du gaz naturel comportant les hydrocarbures présentant la chaine carbonée la plus courte,
- un second circuit, d'alimentation du brûleur, ledit second circuit court-circuitant ledit séparateur de phases.

Selon des modes de réalisation, un tel système peut comporter une ou plusieurs des caractéristiques suivantes :
- le premier circuit présente, en amont du séparateur de phases au moins une portion de circuit commune avec le second circuit, agencée pour permettre une vaporisation forcée du gaz naturel liquéfié et/ou une collecte du gaz naturel, évaporé dans la cuve.
- une portion de circuit commune au premier et au second circuit comporte une canalisation d'aspiration, débouchant vers le fond de la cuve, équipée d'une pompe et une installation de vaporisation forcée permettant de transformer le gaz naturel liquéfié en flux gazeux.
- une portion de circuit commune au premier et au second circuit comporte une canalisation débouchant en partie haute de la cuve pour collecter du gaz naturel évaporé dans la cuve.
- une portion de circuit commune au premier et au second circuit est limitée en aval par un organe de raccordement à trois voies commutable permettant de raccorder sélectivement la portion de circuit commune à une entrée du séparateur de phases ou à une portion du second circuit menant au brûleur.
- le second circuit pour l'alimentation du bruleur est équipé d'un appareil de chauffage du gaz.
- le premier circuit pour l'alimentation en gaz naturel de l'équipement de production d'énergie comporte un compresseur disposé en aval du séparateur de phases.
- le système comporte un dispositif de contrôle d'une variable représentative de l'indice de méthane du gaz naturel liquéfié acheminé.
- le dispositif de contrôle d'une variable représentative de l'indice de méthane du gaz naturel liquéfié acheminé comporte un capteur de mesure du débit dans le conduit d'amenée vers l'équipement de production d'énergie et/ou un capteur de mesure de la température de gaz naturel évaporé, collecté dans la cuve et/ou un capteur de mesure du niveau dans un récipient de récupération des condensats et/ou un compteur de mesure de la fréquence de purge d'un récipient de récupération des condensats.
- le dispositif de contrôle est agencé pour générer un signal d'alarme et/ou agir sur un organe de raccordement à trois voies commutable de sorte à conduire le gaz naturel vers le brûleur lorsque la variable représentative de l'indice de méthane du gaz naturel liquéfié acheminé dépasse un seuil.

Selon un mode de réalisation, l'invention fournit aussi un navire comportant une cuve de stockage de gaz liquéfié, un équipement de production d'énergie, une installation de production d'énergie équipée d'un bruleur et un système de traitement et d'acheminement du gaz naturel du type susmentionné ci-dessus.

Selon des modes de réalisation, un tel navire peut comporter une ou plusieurs des caractéristiques suivantes :
- l'équipement de production d'énergie est destiné à la propulsion du navire.
- L'équipement de production d'énergie est un moteur à explosion à alimentation mixte diesel gaz naturel.
- la cuve de stockage du gaz liquéfié est une cuve à membrane.
- la cuve est une cuve de stockage à pression atmosphérique.

Selon un mode de réalisation, l'invention concerne également un procédé de remplissage de la cuve d'un navire tel que mentionné ci-dessus dans lequel on achemine un fluide à travers des canalisations isolées depuis une installation de stockage flottante ou terrestre vers la cuve du navire.

Selon un mode de réalisation, l'invention concerne également un système comportant un navire tel que mentionné ci-dessus, des canalisations isolées agencées de manière à relier la cuve installée dans la coque du navire à une installation de stockage flottante ou terrestre et une pompe pour entrainer un flux de fluide à travers les canalisations isolées depuis l'installation de stockage flottante ou terrestre vers la cuve du navire.

### Brève description des figures

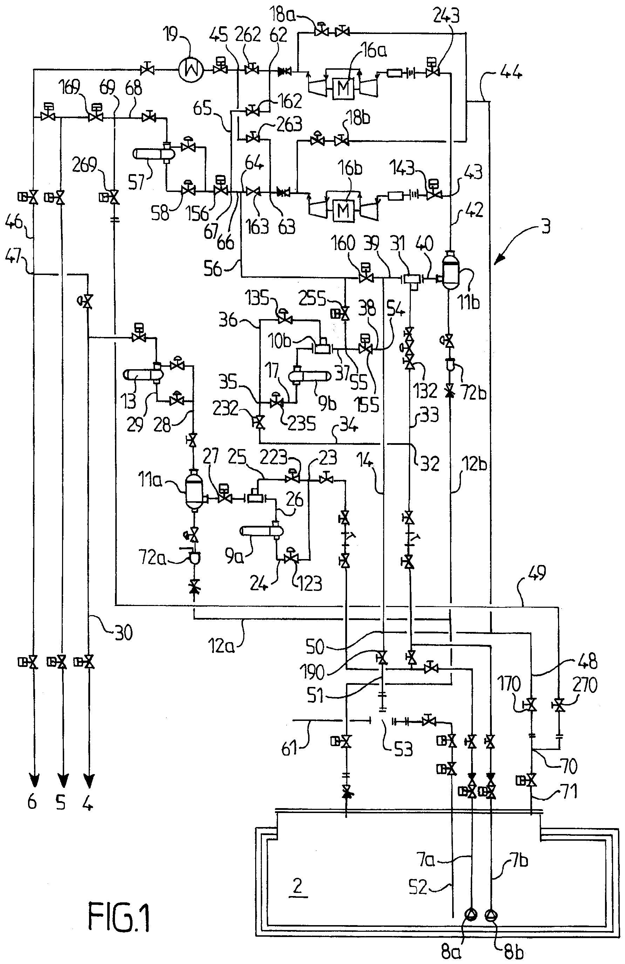

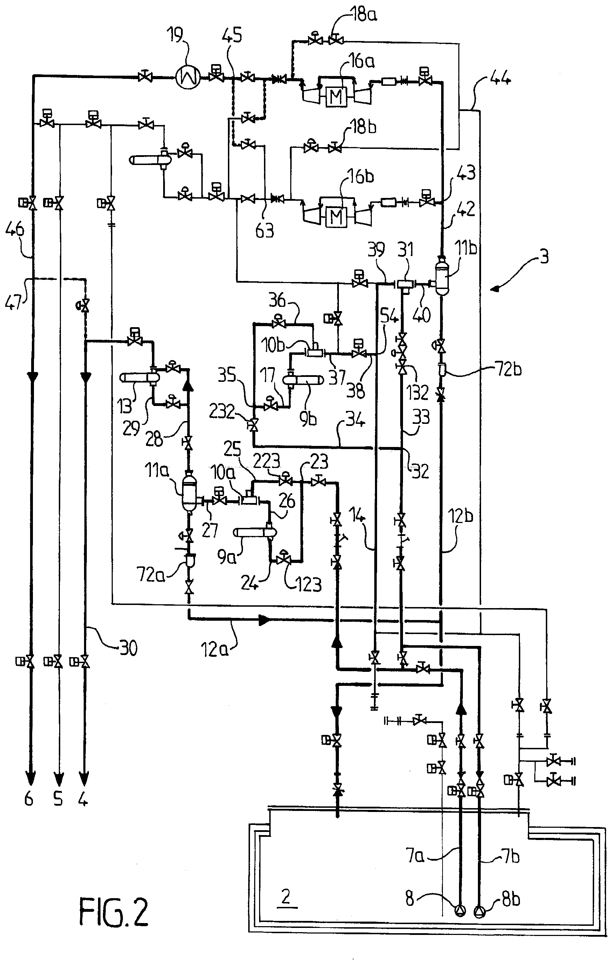

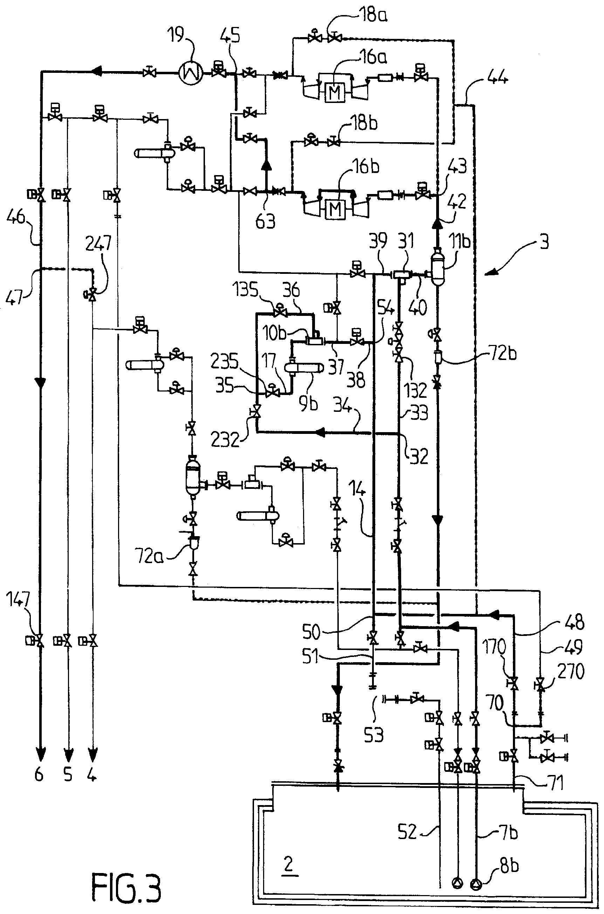

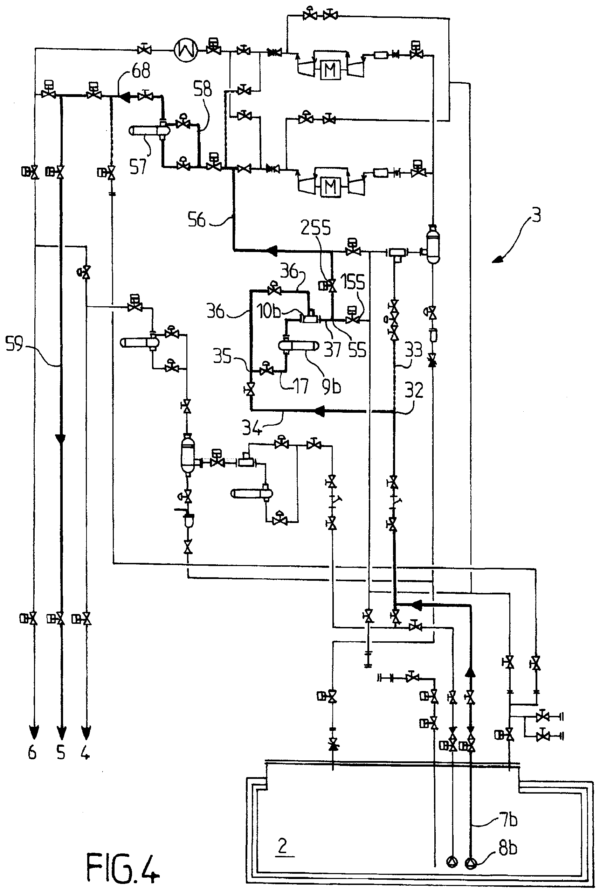

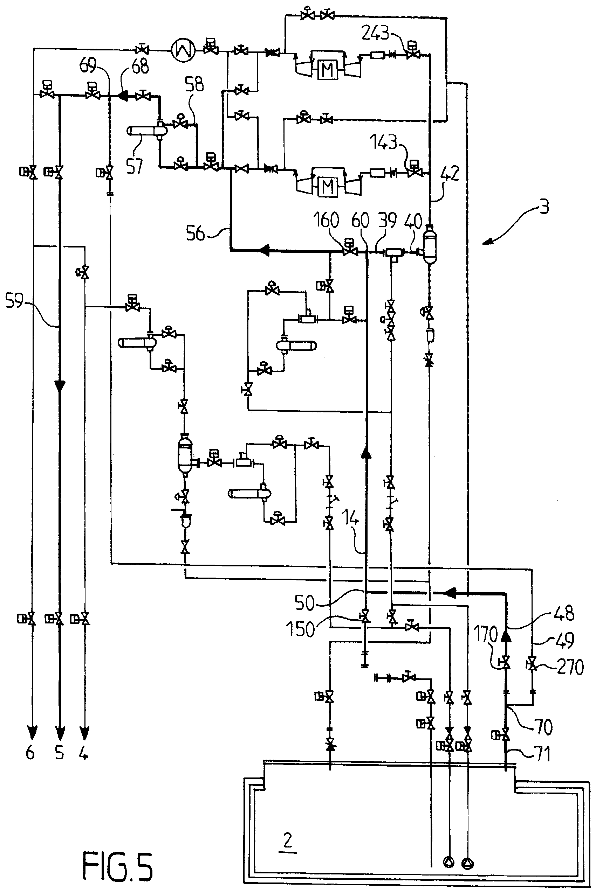

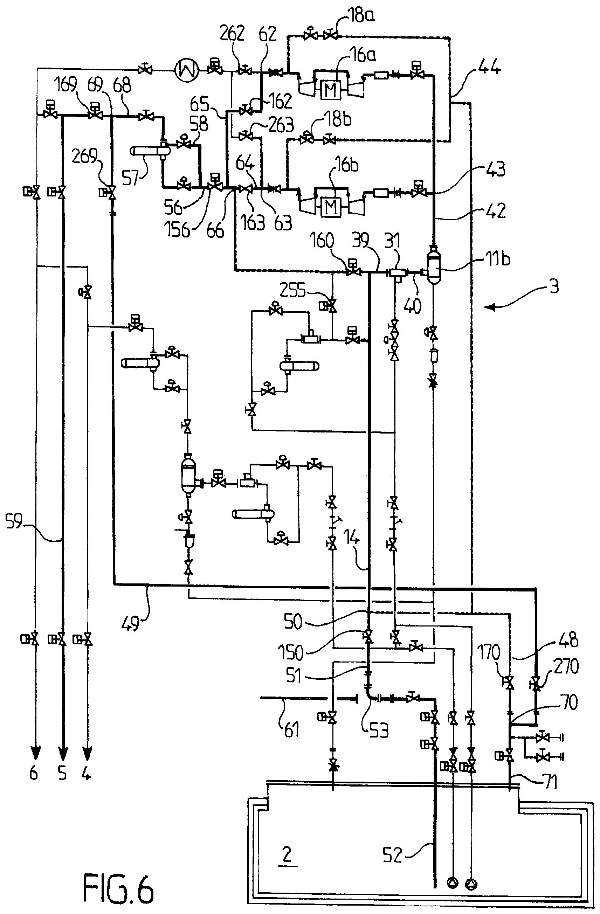

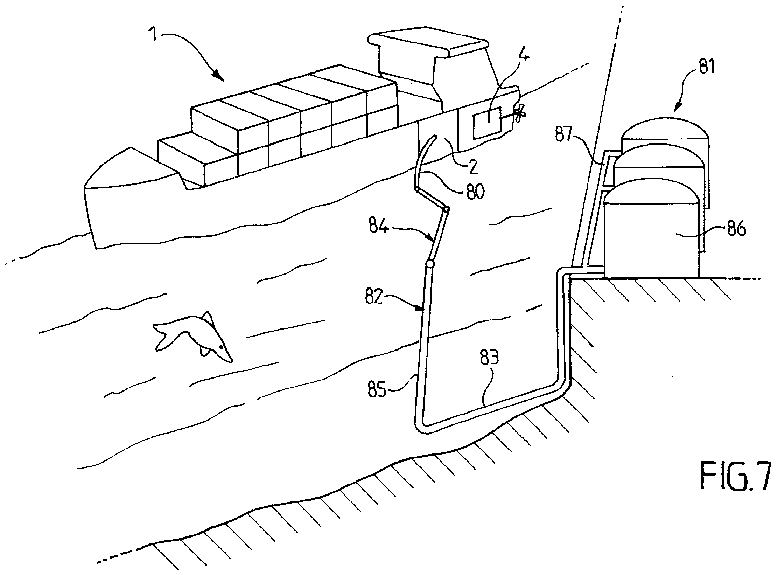

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue schématique d'un système de traitement et d'acheminement de gaz naturel embarqué d'un navire.
- **La** **figure 2** illustre le système de la figure 1, dans lequel un cheminement du gaz naturel pour l'alimentation d'un équipement de production d'énergie pour la propulsion du navire et pour l'alimentation d'un équipement de production d'énergie pour la génération d'électricité est mis en évidence par un surlignage.
- **La** **figure 3** illustre le système de la figure 1, dans lequel un cheminement du gaz naturel pour l'alimentation d'un équipement de production d'énergie pour la génération d'électricité est mis en évidence par un surlignage.
- **La** **figure 4** illustre le système de la figure 1, dans lequel un cheminement du gaz naturel vers un brûleur d'une installation de production d'énergie pour la valorisation de la fraction lourde du gaz naturel est mis en exergue.
- **La** **figure 5** illustre le système de la figure 1, dans lequel un cheminement de gaz naturel, évaporé dans la cuve, vers le brûleur de l'installation de production d'énergie est mis en exergue.
- **La** **figure 6** illustre le système de la figure 1, dans lequel un cheminement du gaz naturel lors de la mise en oeuvre d'un procédé de chauffage de la cuve est mis en évidence.
- **La** **figure 7** illustre un navire équipé d'une cuve de stockage de gaz et d'un équipement de production d'énergie alimenté au gaz naturel pour la propulsion du navire.

### Description détaillée de modes de réalisation

Dans la description et les revendications, les termes "amont" et "aval" sont définis par rapport au sens de circulation du gaz naturel.

La figure 7 représente un navire 1 équipé d'une ou plusieurs cuves 2 de stockage de gaz naturel liquéfié et d'un groupe motopropulseur comportant un ou plusieurs équipements de production d'énergie 4, choisis parmi les moteurs thermiques, les piles à combustion ou les turbines à gaz, alimentés au gaz naturel. Un tel navire 1 peut notamment être un méthanier destiné au transport de gaz naturel liquéfié, mais peut également être destiné à toutes autres applications. A titre d'exemple, il peut s'agir d'un navire de transport de marchandises, d'un navire de transport de passagers, d'un navire de pêche ou autres.

La figure 1 représente une cuve 2 de stockage de gaz naturel ainsi qu'un système 3, embarqué à bord du navire 1, de traitement et d'acheminement du gaz naturel. Le système 3 de traitement et d'acheminement du gaz naturel est adapté pour l'alimentation d'un équipement de production d'énergie 4 du groupe motopropulseur, tel que représenté sur la figure 2, pour l'alimentation d'un brûleur 5, tel que représenté sur les figures 4, 5 et 6 et, optionnellement, pour l'alimentation autre équipement de production d'énergie, tel qu'un moteur thermique, une pile à combustion ou une turbine à gaz 6 d'un générateur électrique, tel que représenté sur les figures 2 et 3.

La cuve 2 est une cuve étanche et thermiquement isolante adaptée pour le stockage de gaz naturel liquéfié (GNL). La cuve 2 peut notamment être du type à membranes permettant de stocker le gaz naturel liquéfié, à pression atmosphérique.

L'équipement de production d'énergie 4 du groupe motopropulseur est choisi parmi les moteurs thermiques, les piles à combustion et les turbines à gaz. Lorsque l'équipement de production d'énergie 4 est un moteur thermique à explosion, le moteur peut être à alimentation mixte diesel-gaz naturel. De tels moteurs 4 peuvent fonctionner, soit en mode diesel dans lequel le moteur est intégralement alimenté en diesel soit en mode gaz naturel dans lequel le combustible du moteur est principalement constitué de gaz naturel alors qu'une faible quantité de diesel pilote est injectée pour initier la combustion.

L'arbre de sortie associé à l'énergie mécanique générée par l'équipement de production d'énergie 4 du groupe motopropulseur peut soit être accouplé à une ou plusieurs hélices pour la propulsion du navire, soit être accouplé à un alternateur permettant de transformer l'énergie mécanique en énergie électrique, l'énergie électrique étant dans ce cas utilisée pour l'alimentation d'un moteur électrique accouplé à une hélice pour la propulsion du navire. Dans cette dernière alternative, si un moteur thermique est appliqué, il peut notamment être un moteur de technologie DFDE pour« Dual Fuel Diesel Electric » en langue anglaise.

L'équipement de production d'énergie 6 pour la génération d'électricité peut être un moteur thermique à alimentation mixte diesel-gaz naturel, par exemple de type DFDE, une pile à combustion ou une turbine à gaz.

Le bruleur 5 est intégré à une installation de production d'énergie. L'installation de production d'énergie peut notamment comporter une chaudière de production de vapeur. La vapeur peut être destinée à alimenter des turbines à vapeur pour la production d'énergie et/ou à alimenter un réseau de chauffage du navire 1.

La figure 2 illustre deux circuits alimentant respectivement l'équipement de production d'énergie 4 du groupe motopropulseur et l'équipement de production d'énergie 6 pour la génération d'électricité. Le circuit alimentant l'équipement de production d'énergie 4 du groupe motopropulseur sera par la suite désigné par « circuit principal » alors que le circuit alimentant l'équipement de production d'énergie 6 pour la production d'électricité sera désigné par « circuit secondaire ». Notons que le circuit principale peut également être utilisé afin d'acheminer le gaz naturel vers le circuit secondaire ou inversement. Un tel agencement permet d'assurer une redondance de l'alimentation des équipements de production d'énergie 4, 6, de sorte à pallier à d'éventuels disfonctionnements.

Le circuit principal comporte une canalisation d'aspiration 7a débouchant vers le fond de la cuve 2 et alimentée par une pompe 8a. La canalisation d'aspiration 7a conduit le gaz naturel liquéfie vers un raccordement à trois voies 23 permettant de raccorder la canalisation d'aspiration 7a, d'une part, à une canalisation 24, équipée d'une vanne 123, raccordée à l'entrée d'une installation de vaporisation forcée 9a, également appelée évaporateur, et, d'autre part à une canalisation 25, équipée d'une vanne 223, raccordée à un pulvérisateur 10a. L'installation de vaporisation forcée 9a permet de transformer le gaz naturel liquéfié en flux gazeux. La sortie de l'installation de vaporisation forcée 9a est raccordée par un conduit 26 au pulvérisateur 10a afin de conduire le flux gazeux vers ledit pulvérisateur 10a. Le pulvérisateur 10a est apte à pulvériser, dans le flux gazeux, obtenu à la sortie de l'installation de vaporisation forcée 9a, du gaz naturel liquéfié collecté en amont de ladite installation de vaporisation forcée 9a. Le pulvérisateur 10a permet ainsi de refroidir le flux gazeux de telle sorte que les hydrocarbures les plus lourds, c'est-à-dire ceux présentant la chaine carbonée la plus longue et les températures d'évaporation les plus élevées se condensent. Le flux gazeux est typiquement refroidi à une température inférieure à -100°C.

En sortie du pulvérisateur 10a, le flux gazeux chargé de gouttelettes de gaz naturel en suspension est conduit vers un séparateur de phases 11a via la canalisation 27. Ce séparateur de phases 11a, parfois appelé séparateur de brouillard, ou « mist separator» en langue anglaise, permet de séparer la phase liquide de la phase gazeuse. La phase liquide est constituée d'une fraction lourde du gaz naturel comportant les hydrocarbures les plus lourds, c'est-à-dire présentant la chaîne carbonée la plus longue. La fraction lourde du gaz naturel est renvoyée sous forme de condensats vers la cuve de stockage 2 via une canalisation de retour de condensats 12a. La canalisation de retour de condensats 12a est équipée d'un récipient 72a de récupération des condensats qui est régulièrement purgé lorsque son niveau de condensats atteint un seuil.

La phase gazeuse, constituée de la fraction légère du gaz naturel comportant les hydrocarbures présentant la chaîne carbonée la plus courte, est quant à elle conduite, via la canalisation 28, vers un appareil de chauffage du gaz 13 permettant de chauffer la phase gazeuse à une température typique de 30°C. Un tel appareil de chauffage du gaz 13 est typiquement un échangeur de chaleur gaz/liquide ou gaz/gaz. L'appareil de chauffage du gaz 13 est ici équipé d'une boucle de recirculation 29.

Enfin, en sortie de l'appareil de chauffage du gaz 13a, le flux gazeux peut être conduit vers l'équipement de production d'énergie 4 du groupe motopropulseur via la canalisation 30.

De manière similaire, le circuit secondaire comporte une canalisation d'aspiration 7b débouchant vers le fond de la cuve 2 et alimentée par une pompe 8b. La canalisation d'aspiration 7b permet d'amener le gaz naturel liquéfié vers une installation de vaporisation forcée 9b et vers deux pulvérisateur 10b et 31. Pour ce faire, la canalisation d'aspiration 7b est raccordée via un raccordement à trois voies 32, d'une part à une canalisation 33, équipée d'une vanne 132, conduisant à un pulvérisateur 31 et, d'autre part, à une canalisation 34, équipée d'une vanne 232, et elle-même raccordée à un raccordement à trois voies 35 permettant de raccorder ladite canalisation 34, d'une part, au pulvérisateur 10b via la canalisation 36, équipée d'une vanne 135 et, d'autre part, à l'entrée de l'installation de vaporisation forcée 9b via la canalisation 17, équipée d'une vanne 235.

La sortie de l'installation de vaporisation forcée 9b est raccordée par une série de canalisations 37, 38, 39 aux pulvérisateurs 10a, 31 permettant de pulvériser du gaz naturel liquéfié de sorte à condenser les hydrocarbures les plus lourds. Le flux gazeux, en sortie du pulvérisateur 31, est conduit à l'entrée d'un séparateur de phases 11 b via une canalisation 40.

De manière similaire, le séparateur de phases 11 b permet de séparer la phase liquide de la phase gazeuse et de retourner les condensats vers la cuve 2 via une canalisation de retour des condensats 12b. La canalisation de retour des condensats 12b est équipée d'un récipient 72b de récupération des condensats qui est régulièrement purgé lorsque son niveau de condensats atteint un seuil.

D'autre part, en sortie du séparateur de phases 11 b, la phase gazeuse, constituée de la fraction légère du gaz naturel, est conduite, via une canalisation 42 vers un ou plusieurs compresseurs 16a, 16b disposés en parallèle. Afin de permettre, l'acheminement du flux gazeux, en parallèle, vers plusieurs compresseurs 16a, 16b, la canalisation 42 est pourvue d'un ou plusieurs raccordements multi-voies 43 conduisant vers des canalisations équipées de vannes 143, 243. Sur la figure 2, le flux gazeux n'est conduit qu'au travers d'un des deux compresseurs 16a, 16b. Toutefois, en fonction de la consigne de débit d'alimentation de l'équipement de production d'énergie 4 ou 6, il pourra être envisagé de faire transiter le flux gazeux, en parallèle, au travers des deux compresseurs 16a, 16b.

Par exemple, les compresseurs 16a, 16b sont des compresseurs multi-étagés, permettant de chauffer le flux gazeux et de le comprimer à des pressions compatibles avec les spécifications des équipements de production d'énergie 6 alimentés en gaz naturel, par exemple de l'ordre de 5 à 6 bars absolus pour les moteurs thermiques type DFDE. Le compresseur 16a, 16b peut être un compresseur volumétrique, un compresseur centrifuge ou de tout autre type compatible avec les pressions d'alimentation en entrée d'un moteur thermique, d'une pile à combustion, ou d'une turbine à gaz.

De manière avantageuse, le système 3 est équipé d'un dispositif de protection anti-instabilité ou « anti-surge » permettant de protéger le compresseur 16a, 16b contre les régimes à faible débit volumique en entrée. Un tel dispositif comporte, en sortie du compresseur 16a, 16b, une boucle de recirculation 44 qui permet de renvoyer une partie du flux gazeux compressé, en amont dudit compresseur 16. La boucle de recirculation 44 est équipée d'une vanne 18a, 18b permettant de contrôler le débit dans la boucle de recirculation 44. Dans le mode de réalisation représenté, la boucle de recirculation 44 est raccordée à une canalisation 14, dont l'agencement sera décrit par la suite.

En sortie du (des) compresseur(s) 16a, 16b, le flux gazeux est conduit vers un appareil de refroidissement 19 permettant de contrôler la température du flux gazeux à une température de consigne. Lorsque le système comporte plusieurs compresseurs 16a, 16b en parallèle, les sorties desdits compresseurs 16a, 16b sont raccordées à l'entrée de l'appareil de refroidissement 19 via des raccordements à trois voies 45, 63.

Enfin, en sortie de l'appareil de refroidissement 19, le flux gazeux est conduit vers l'équipement de production d'énergie 6 du générateur électrique via une canalisation 46. Notons que ladite canalisation 46 est équipée d'un raccordement à trois voies 47 dont les deux voies sortantes sont équipées de vannes 147, 247 permettant de diriger sélectivement le flux gazeux vers l'équipement de production d'énergie 6 du générateur électrique et/ou vers l'équipement de production d'énergie 4 du groupe motopropulseur.

Notons en outre que, dans le mode de réalisation représenté, le circuit principal, permettant d'alimenter l'équipement de production d'énergie 4, n'est pas équipé d'un compresseur, contrairement au circuit secondaire car le circuit principal ainsi que la pompe 8a alimentant la canalisation d'aspiration 7a du circuit principal sont aptes à fournir des pressions en conformité avec les conditions de fonctionnement dudit équipement de production d'énergie 4.

Sur la figure 3, on a représenté l'acheminement du gaz au travers du circuit secondaire lorsque du gaz naturel évaporé dans la cuve de stockage est incorporé au circuit secondaire d'alimentation de l'équipement de production d'énergie 6.

Pour ce faire, le système 3 comporte une canalisation 71 débouchant en partie haute de la cuve 2. Un raccordement à trois voies 70 raccorde la canalisation 71 débouchant en partie haute de la cuve 2, au circuit secondaire via une canalisation 48 munie d'une vanne 170, et à une canalisation 49, munie d'une vanne 270 et faisait partie d'un circuit de chauffage dont la fonction sera détaillée par la suite. Le raccordement à trois voies 70 ainsi que les vannes 170, 270 forment un organe de raccordement à trois voies commutables.

La canalisation 48 est, par ailleurs, raccordée via un raccordement à trois voies 50 à une canalisation 14. Le raccordement à trois voies 50 raccorde la canalisation 14 à une canalisation 51 équipée d'une vanne 150 et faisant partie du circuit de chauffage et à la canalisation 48 équipée de la vanne 170. Le raccordement à trois voies 50 ainsi que les vannes 150 et 170 forment également un organe de raccordement commutable.

La canalisation 14 est raccordée au circuit secondaire via un raccordement à trois voies 54 permettant de raccorder la sortie du pulvérisateur 10b et ladite canalisation 14 à l'entrée du pulvérisateur 31. Le gaz évaporé dans la cuve 2 est ainsi incorporé au flux gazeux en sortie de l'installation de vaporisation forcée 9b, avant d'être conduit vers le second pulvérisateur 31, ayant également pour fonction de contrôler la température du flux gazeux à l'entrée du séparateur de phases 11 b en pulvérisant du gaz naturel à l'état liquéfié dans le flux gazeux. Ainsi, le circuit d'alimentation secondaire comporte, dans sa portion amont, un chemin d'amenée de gaz naturel évaporé, collecté dans la cuve 2, et un chemin de vaporisation forcée de gaz naturel.

Un tel chemin d'amenée de gaz, évaporé dans la cuve, est particulièrement approprié lorsque le gaz naturel liquéfié est stocké à température ambiante et qu'il en résulte une évaporation naturelle conséquente.

Les figures 4 et 5 illustrent le cheminement pour l'alimentation en gaz naturel du brûleur 5. La figure 4 illustre le chemin de vaporisation forcée du gaz naturel alors que la figure 5 illustre le chemin du gaz naturel évaporé, collecté dans la cuve 2. On notera que, dans les deux cas, le circuit pour l'alimentation du brûleur 5 court-circuite le séparateur de phases 11 b de sorte à permettre une valorisation énergétique de la fraction lourde du gaz naturel.

Sur la figure 4, le circuit d'alimentation du brûleur 5 comporte une portion de circuit commune avec le circuit secondaire. Cette portion de circuit commune permet la vaporisation forcée du gaz naturel liquéfié et comporte la canalisation d'aspiration 8b alimentée par la pompe 8b, l'installation de vaporisation forcée 9b et, optionnellement, le pulvérisateur 10b.

En aval de l'installation de vaporisation forcée 9b, le système 3 de traitement et d'acheminement comporte un raccordement à trois voies 55 raccordant t la sortie de l'installation de vaporisation forcée 9b vers la série de canalisations 38, 39, 40 équipées d'une vanne 155 et menant vers le séparateur de phases 11b, et une canalisation 56, équipée d'une vanne 255 permettant de court-circuiter ledit séparateur de phases 11 b, afin de valoriser, dans le brûleur 5, la fraction lourde du gaz naturel. Ainsi, l'organe de raccordement commutable ainsi formé permet d'acheminer sélectivement la sortie de l'installation de vaporisation forcée 9b soit vers le séparateur de phases 11 b, soit vers le brûleur 5.

La canalisation 56 conduit le flux gazeux, en sortie de l'installation de vaporisation forcée, vers un appareil de chauffage du gaz 57. L'appareil de chauffage du gaz 57 est, par exemple, un échangeur de chaleur gaz/liquide ou gaz/gaz. L'appareil de chauffage du gaz 57 est ici équipé d'une boucle de recirculation 58. L'appareil de chauffage du gaz 57 permet de chauffer la phase gazeuse, en amont dudit brûleur 5 à une température de consigne, typiquement de l'ordre de 30°C. A la sortie de l'appareil de chauffage du gaz 57, des canalisations 68, 59 permettent de mener le gaz vers le brûleur 5.

Sur la figure 5, le circuit d'alimentation du brûleur 5 comporte une autre portion de circuit commune avec le circuit secondaire. Cette portion de circuit commune permet la collecte du gaz naturel, évaporé dans la cuve 2. Cette portion de circuit commune comporte la canalisation 71 débouchant en partie haute de la cuve 2, la canalisation 48 raccordée à la canalisation 71 par le raccordement à trois voies 70 et la canalisation 14 raccordée à la canalisation 71 par le raccordement à trois voies 50. La canalisation 14 est, par ailleurs, connectée à un raccordement à trois voies 60 raccordant la canalisation 14 à la série de canalisations 39, 40 menant vers le séparateur de phases 11 b et vers des vannes 143, 243 et à une canalisation 56, équipée d'une vanne 160, et permettant de court-circuiter ledit séparateur de phases 11 b, afin de valoriser, dans le brûleur 5, la fraction lourde du gaz naturel.

Par la suite, comme nous l'avons détaillé précédemment en relation avec la figure 4, la canalisation 56 conduit le flux gazeux vers l'appareil de chauffage du gaz 57 puis, à la sortie de l'appareil de chauffage du gaz 57, des canalisations 68, 59 permettent de mener le gaz vers le brûleur 5.

Notons que, si le chemin du gaz naturel, évaporé dans la cuve 2, et le chemin de vaporisation forcée du gaz naturel sont illustrés sur deux figures différentes afin d'en faciliter la compréhension, il est tout à fait possible d'utiliser simultanément ces deux chemins pour conduire du gaz naturel vers le brûleur 5.

Le système 3 de traitement et d'acheminement du gaz naturel est avantageusement équipé d'un dispositif de contrôle d'une variable représentative de l'indice de méthane du gaz naturel liquéfié acheminé. L'indice de méthane indique la capacité du mélange gazeux à résister au phénomène indésirable de cliquetis et est compris entre 0 et 100. L'indice de méthane dépend de la composition du gaz naturel. L'indice du méthane pur est de 100. L'indice diminue lorsque la proportion des hydrocarbures plus lourds tels que, le propane et/ou le butane et/ou le pentane augmente.

Un tel dispositif de contrôle d'une variable représentative de l'indice de méthane du gaz naturel peut notamment comporter un ou plusieurs débitmètres disposés en aval de l'un ou des deux séparateurs de phases 11a, 11 b, dans la canalisation 42 par exemple, afin de mesurer le débit du flux gazeux de la fraction légère du gaz naturel. Ce débit est représentatif de l'indice de méthane du gaz naturel liquéfié acheminé. En effet, en régime continue, à débit de pompage constant, ce débit aura tendance à diminuer lorsque la cuve 2 se vide et que la concentration en hydrocarbures lourds augmente.

De manière alternative ou en complément, il est également possible de placer un capteur de température, par exemple dans la canalisation 48 permettant de conduire le gaz évaporé, collecté dans la cuve 2, afin de mesurer la température du gaz évaporé. En effet, plus la température du gaz évaporé est importante, plus celle-ci comporte une proportion d'hydrocarbures lourds importante, puisque l'on s'approche de la fin du voyage.

En outre, de manière alternative ou en complément, il est également possible d'enregistrer la fréquence de purge d'au moins un des récipients 72a, 72b de récupération des condensats et/ou de suivre l'évolution du niveau de condensats d'au moins un des récipients 72a, 72b.

Le dispositif de contrôle comporte également une unité de contrôle apte à recevoir et traiter les données collectées par au moins l'un des capteurs mentionnés ci-dessous. L'unité de contrôle compare la (les) variable(s) représentative(s) de l'indice de méthane à un seuil. En fonction de cette comparaison, l'unité de contrôle est apte à générer une alarme ou à passer automatiquement d'un mode de fonctionnement dans lequel le gaz naturel alimente l'équipement de production d'énergie 4, 6 du groupe motopropulseur et/ou du générateur électrique à un mode de fonctionnement dans lequel la fraction lourde du gaz naturel est valorisé et conduite vers le brûleur 5 de l'installation de production d'énergie. En pratique, lorsque la variable représentative de l'indice de méthane correspond à un indice de méthane inférieur à un indice d'environ 80, l'unité de contrôle génère une alarme ou passe automatiquement en mode valorisation de la fraction lourde du gaz naturel.

Dans le mode de réalisation prévoyant un tel changement automatique de mode de fonctionnement, le dispositif de contrôle est apte à transmettre un signal de consigne à une plusieurs vannes 155, 255, 160, 143, 243 équipant les raccordement à trois voies 55 et 60 de sorte à faire bifurquer le flux gazeux vers le brûleur 5 en court-circuitant ledit séparateur de phases 11 b.

Lorsque l'équipement de production d'énergie est un moteur à explosion à alimentation mixte gaz diesel, en parallèle au passage vers un mode de fonctionnement dans lequel la fraction lourde du gaz naturel est valorisée et conduite vers le brûleur 5, le moteur thermique ou la pile à combustion ou la turbine à gaz 4 du groupe motopropulseur et/ou celui du générateur électrique 6 bascule en mode diesel afin de poursuivre la propulsion du navire et/ou la génération d'électricité.

La figure 6 illustre le cheminement du gaz naturel lorsque l'on met en oeuvre un procédé permettant de réchauffer la cuve 2. Ce procédé est mis en oeuvre lorsque la cuve 2 est quasiment vide, le reliquat de gaz naturel étant alors sous forme gazeuse dans la cuve 2.

Lors de la mise en oeuvre du procédé de chauffage, le gaz naturel est collecté en partie basse de la cuve 2 au moyen d'une canalisation 52 débouchant en partie basse de la cuve 2.

Dans le mode de réalisation représenté, la canalisation 52 débouchant en partie basse de la cuve 2 est connectée à un organe de raccordement à trois voies commutable 53 permettant de raccorder sélectivement ladite canalisation 52, soit à une canalisation 51 de la portion amont du circuit de chauffage de sorte à permettre une collecte de flux gazeux en partie basse de la cuve 2, soit à un circuit 61 de remplissage de la cuve 2 permettant d'acheminer du gaz naturel liquéfié d'un réservoir terrestre vers la cuve 2.

Par ailleurs, la canalisation 51 de la portion amont du circuit de chauffage est connectée, en aval, à un raccordement à trois voies 50. Les vannes 170, 150 permettent de raccorder sélectivement soit la canalisation 51 de la portion amont du circuit de chauffage, soit la canalisation 48 permettant de conduire le gaz évaporé, collecté dans la cuve 2, à la canalisation 14.

La portion amont du circuit de chauffage peut ainsi être raccordée à l'entrée des compresseurs 16a, 16b via les canalisations 39, 40 et 42 de sorte à conduire le gaz collecté en partie basse de la cuve vers les compresseurs. La température du flux gazeux en sortie des compresseurs 16a, 16b, pour la mise en oeuvre du procédé de chauffage de la cuve 2, est, par exemple, de l'ordre de 50°C.

La portion de circuit comportant les canalisations 14, 39, 40 et 42 ainsi qu'au moins un des compresseurs 16a, 16b est ainsi commune au circuit secondaire d'alimentation en gaz d'un équipement de production d'énergie 4, 6 et au circuit de chauffage. Dès lors, la conception du système 3 de traitement et d'acheminement des gaz est optimisé et au moins un des compresseurs 16a, 16b assure à la fois la préparation d'un flux gazeux pour l'alimentation d'un équipement de production d'énergie4, 6 et la mise en oeuvre d'un procédé de chauffage de la cuve 2.

En sortie des compresseurs 16a, 16b, des raccordements à trois voies 62, 63 raccordant la sortie des compresseurs 16a, 16b à des canalisations 64, 65 équipée de vannes 162, 163 et à des canalisations débouchant vers le circuit d'alimentation secondaire et équipées de vannes 262, 263. Lesdites canalisations 64, 65 sont raccordées via des raccordements à trois voies 66, 67 à la canalisation 56 faisant partie du circuit d'alimentation du brûleur 6 menant à l'appareil de chauffage du gaz 57.

Ainsi, pour le chauffage de la cuve 2, le flux gazeux passe à la fois au travers des compresseurs 16a, 16b et au travers de l'appareil de chauffage 57. En sortie de l'appareil de chauffage du gaz 57, le flux gazeux présente, par exemple, une température de l'ordre de 80°C.

Par ailleurs, en sortie de l'appareil de chauffage du gaz 57, une canalisation 68 conduit à un raccordement à trois voies 69 qui permet d'évacuer une partie du flux, en excès, vers le brûleur 5 via la canalisation 59 équipée d'une vanne 169 et de renvoyer l'autre partie du flux gazeux vers la cuve 2 via une canalisation 49 équipée d'une vanne 269 et formant un tronçon de retour vers la cuve 2.

On comprend ainsi que la canalisation 56, l'appareil de chauffage du gaz 57 ainsi que la canalisation 68 définissent une portion de circuit qui est commune au circuit de chauffage de la cuve 2 et au circuit d'alimentation en gaz du brûleur 5. Dès lors, les canalisations 64, 65 forment des tronçons de raccordement permettant de raccorder la sortie des compresseurs 16, 16b à la portion de circuit qui est commune au circuit de chauffage de la cuve 2 et au circuit d'alimentation en gaz du brûleur 5.

La canalisation 49 formant un tronçon de retour vers la cuve 2 est raccordée, par le raccordement à trois voies 70, à la canalisation 71 débouchant en partie haute de la cuve 2. Ainsi, en fonction de la position des vannes 170, 270, la canalisation 71 débouchant en partie haute de la cuve 2 pourra être utilisée pour la collecte du gaz évaporé dans la cuve 2 lorsque l'on souhaite alimenter un équipement de production d'énergie 4, 6 ou le brûleur 5, en gaz naturel, ou pour injecter du gaz chaud lorsque l'on souhaite chauffer la cuve 2.

Dès lors, pendant la mise en oeuvre du procédé de chauffage de la cuve 2, du gaz chaud est injecté en partie haute de la cuve 2 tandis que le gaz est extrait en partie basse de la cuve 2. Le gaz chaud ayant par nature tendance à se positionner en partie haute de la cuve 2, un tel agencement permet d'obtenir une stratification thermique de la cuve 2 qui augmente le rendement du procédé de chauffage de la cuve 2.

De manière connue en soi, tel que représenté sur la figure 7, des canalisations de chargement/déchargement peuvent être raccordées, au moyen de connecteurs appropriées, à un terminal maritime ou portuaire pour transférer une cargaison de GNL depuis ou vers la cuve 2.

La figure 7 représente un exemple de terminal maritime comportant un poste d'approvisionnement en gaz naturel liquéfié 82, une conduite sous-marine 83 et une installation à terre 81. Le poste d'approvisionnement en gaz naturel liquéfié 82 est une installation fixe off-shore comportant un bras mobile 84 et une tour 85 qui supporte le bras mobile 84. Le bras mobile 84 porte tuyaux flexibles isolés 80 pouvant se connecter aux canalisations de chargement. Le bras mobile 84 orientable s'adapte à tous les gabarits de navires. Une conduite de liaison non représentée s'étend à l'intérieur de la tour 85. Le poste d'approvisionnement en gaz naturel liquéfié 82 permet le remplissage de la cuve du navire 1 depuis l'installation à terre 81. Celle-ci comporte des cuves de stockage de gaz liquéfié 86 et des conduites de liaison 87 reliées par la conduite sous-marine 83 au poste d'approvisionnement en gaz naturel liquéfié 82. La conduite sous-marine 83 permet le transfert du gaz liquéfié entre le poste d'approvisionnement en gaz naturel liquéfié 82 et l'installation à terre 81.

Pour engendrer la pression nécessaire au transfert du gaz liquéfié, on met en oeuvre des pompes embarquées dans le navire 1 et/ou des pompes équipant l'installation à terre 81 et/ou des pompes équipant le poste de chargement et de déchargement 82.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

En particulier, si dans les modes de réalisation décrits ci-dessus, le navire ne comporte qu'une seule cuve de stockage du gaz naturel liquéfié, il est également possible de raccorder le système de traitement et d'acheminement du gaz à une pluralité de cuves de stockage. Les cuves de stockage sont, dans ce cas, chacune équipées de canalisations d'aspiration alimentées par des pompes et de canalisations débouchant en partie haute et en partie basse de la cuve, raccordées aux circuits du système de traitement tel que décrit ci-dessus.

On note par ailleurs que si le terme d'organe de raccordement a été utilisé ci-dessus pour décrire l'association d'un raccordement à trois voies avec plusieurs vannes équipant une ou plusieurs canalisations entrantes ou une ou plusieurs canalisations sortantes, ce terme s'étend à tous les équivalents techniques permettant de raccorder deux canalisations entrantes à une canalisation sortante ou une canalisation entrante à deux canalisations sortantes, et équipés de moyens permettant, selon les circonstances, d'opérer une sélection pour privilégier soit un flux provenant d'une des deux canalisations entrantes soit un flux en direction de l'une des deux canalisations sortantes ou de répartir soit un flux entrant vers deux flux sortants soit deux flux entrants vers un flux sortant.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Procédé de traitement et d'acheminement de gaz naturel, dans un navire (1), depuis une cuve (2) de stockage de gaz liquéfié vers un équipement de production d'énergie (4, 6), d'une part, et vers un brûleur (5) d'une installation de production d'énergie, d'autre part, ledit procédé prévoyant :
- une étape d'alimentation de l'équipement de production d'énergie (4, 6) pendant laquelle l'on conduit du gaz naturel au travers un séparateur de phases (11a, 11 b) permettant de retourner, vers la cuve (2), sous forme de condensat, une fraction lourde du gaz naturel comportant les hydrocarbures présentant la chaîne carbonée la plus longue et de conduire vers l'équipement de production d'énergie (4, 6) une fraction légère du gaz naturel comportant les hydrocarbures présentant la chaine carbonée la plus courte; ledit procédé étant **caractérisé en ce qu'**il comporte successivement à ladite étape d'alimentation de l'équipement de production d'énergie :
- une étape de valorisation de la fraction lourde du gaz naturel pendant laquelle l'on conduit du gaz naturel de la cuve (2) vers le brûleur (5) en court-circuitant ledit séparateur de phases (11 a, 11 b).

2. Procédé selon la revendication 1, dans lequel l'on contrôle une variable représentative de l'indice de méthane du gaz naturel acheminé, pendant l'étape d'alimentation de l'équipement de production d'énergie (4, 6).

3. Procédé selon la revendication 2, dans lequel l'on passe automatiquement à l'étape de valorisation de la fraction lourde du gaz naturel et/ou l'on génère un signal d'alarme lorsque la variable représentative de l'indice de méthane du gaz naturel acheminé dépasse un seuil.

4. Procédé selon la revendication 2 ou 3, dans lequel la variable représentative de l'indice de méthane du gaz naturel acheminé est déterminée par mesure du débit de la fraction légère du gaz naturel en aval du séparateur de phases (11a, 11 b) et/ou par mesure de la température de gaz naturel évaporé, collecté dans la cuve et/ou par mesure du niveau et/ou de la fréquence de purge d'un récipient de récupération des condensats.

5. Système, embarqué à bord d'un navire (1), de traitement et d'acheminement de gaz naturel depuis une cuve (2) de stockage de gaz liquéfié vers un équipement de production d'énergie (4, 6), d'une part, et vers un brûleur (5) d'une installation de production d'énergie, d'autre part, le système comportant :
- un premier circuit d'alimentation de l'équipement de production d'énergie (4, 6), ledit premier circuit étant équipé d'un séparateur de phases (11a, 11b) connecté, en aval, d'une part, à un conduit de retour (12a, 12b) permettant de retourner, sous forme de condensat, vers la cuve (2), une fraction lourde du gaz naturel comportant les hydrocarbures présentant la chaîne carbonée la plus longue et, d'autre part, à un conduit d'amenée (42) vers l'équipement de production d'énergie (4, 6) permettant de conduire une fraction légère du gaz naturel comportant les hydrocarbures présentant la chaine carbonée la plus courte, ledit système étant **caractérisé en ce qu'**il comporte :
- un second circuit, d'alimentation du brûleur (5), ledit second circuit court-circuitant ledit séparateur de phases (11 a, 11 b).

6. Système selon la revendication 5, dans lequel le premier circuit présente, en amont du séparateur de phases (11 b), au moins une portion de circuit commune avec le second circuit, agencée pour permettre une vaporisation forcée du gaz naturel liquéfié et/ou une collecte du gaz naturel, évaporé dans la cuve (2).

7. Système selon la revendication 6, dans lequel une portion de circuit commune au premier et au second circuit comporte une canalisation d'aspiration (7b), débouchant vers le fond de la cuve (2), équipée d'une pompe (8b) et une installation de vaporisation forcée (9b) permettant de transformer le gaz naturel liquéfié en flux gazeux.

8. Système selon la revendication 6 ou 7, dans lequel une portion de circuit commune au premier et au second circuit comporte une canalisation (71) débouchant en partie haute de la cuve (2) pour collecter du gaz naturel évaporé dans la cuve (2).

9. Système selon l'une quelconque des revendications 5 à 8, dans lequel une portion de circuit commune au premier et au second circuit est limitée en aval par un organe de raccordement à trois voies commutable (55 ; 155 ; 255 - 60 ; 160 ; 143 ; 243) permettant de raccorder sélectivement la portion de circuit commune à une entrée du séparateur de phases (11b) ou à une portion du second circuit menant au brûleur (5).

10. Système selon la revendication 5 à 9, dans lequel le second circuit pour l'alimentation du bruleur (5) est équipé d'un appareil de chauffage du gaz (57).

11. Système selon l'une quelconque des revendications 5 à 10, dans lequel le premier circuit pour l'alimentation en gaz naturel de l'équipement de production d'énergie (4, 6) comporte un compresseur (16a, 16b) disposé en aval du séparateur de phases (11 b).

12. Système selon l'une quelconque des revendications 5 à 11, comportant un dispositif de contrôle d'une variable représentative de l'indice de méthane du gaz naturel liquéfié acheminé.

13. Système selon la revendication 12, dans lequel le dispositif de contrôle d'une variable représentative de l'indice de méthane du gaz naturel liquéfié acheminé comporte un capteur de mesure du débit dans le conduit d'amenée (42) vers l'équipement de production d'énergie et/ou un capteur de mesure de la température de gaz naturel évaporé, collecté dans la cuve (2) et/ou un capteur de mesure du niveau dans un récipient (72a, 72b) de récupération des condensats et/ou un compteur de mesure de la fréquence de purge d'un récipient (72a, 72b) de récupération des condensats.

14. Système selon la revendication 12 ou 13, dans lequel le dispositif de contrôle est agencé pour générer un signal d'alarme et/ou agir sur un organe de raccordement à trois voies commutable (55 ; 155 ; 255 - 60 ; 160 ; 143 ; 243) de sorte à conduire le gaz naturel vers le brûleur (5) lorsque la variable représentative de l'indice de méthane du gaz naturel liquéfié acheminé dépasse un seuil.

15. Navire comportant une cuve de stockage de gaz liquéfié, un équipement de production d'énergie (4, 6), une installation de production d'énergie équipée d'un bruleur et un système de traitement et d'acheminement du gaz naturel selon l'une quelconque des revendications 5 à 14.

16. Navire selon la revendication 15, dans lequel l'équipement de production d'énergie est destiné à assurer la propulsion du navire.

17. Navire selon revendication 15 ou 16, dans lequel la cuve de stockage du gaz liquéfié est une cuve à membrane.

18. Navire selon l'une quelconque des revendications 15 à 17, dans lequel la cuve est une cuve de stockage à pression atmosphérique.

19. Procédé de remplissage d'une cuve d'un navire (1) selon l'une quelconque des revendications 15 à 18, dans lequel on achemine un fluide à travers des canalisations isolées (80) depuis une installation de stockage flottante ou terrestre (81) vers la cuve (2) du navire (1).

20. Système de transfert pour un fluide, le système comportant un navire (1) selon l'une quelconque des revendications 15 à 18, des canalisations isolées (80) agencées de manière à relier la cuve (2) installée dans la coque du navire à une installation de stockage flottante ou terrestre (81) et une pompe pour entrainer un flux de fluide à travers les canalisations isolées depuis l'installation de stockage flottante ou terrestre vers la cuve du navire.

## Patentansprüche

1. Verfahren zur Behandlung und Zufuhr von Erdgas in einem Schiff (1), ausgehend von einem Flüssiggaslagertank zum Einen zu einer Energieerzeugungsvorrichtung (4,6) und zum Anderen zu einem Brenner (5) einer Energieerzeugungsanlage, das Verfahren umfassend:
- einen Versorgungsschritt der Energieerzeugungsvorrichtung (4,6) wobei Erdgas durch einen Phasenseparator (11 a, 11 b) geleitet wird, der eine Rückführung einer schweren Fraktion des Erdgases, umfassend Kohlenwasserstoffe mit längstkettigen Kohlenstoffketten, in Form eines Kondensates zum Tank (2) ermöglicht, und wobei hin zur Energieerzeugungsvorrichtung (4,6) eine leichte Fraktion des Erdgases, welche Kohlenwasserstoffe mit kürzestkettige Kohlenstoffketten umfasst, geleitet wird; wobei das Verfahren **dadurch gekennzeichnet ist, dass** es nachfolgend dem Versorgungsschritt der Energieerzeugungsvorrichtung umfasst:
- einen Rückgewinnungsschritt der schweren Fraktion des Erdgases, wobei Erdgas aus dem Tank (2) zum Brenner durch Kurzschließen des Phasenseparators (11 a, 11 b) geleitet wird.

2. Verfahren gemäß Anspruch 1, wobei eine Variable, die die Methanzahl kennzeichnet, des beförderten Erdgases während des Versorgungsschritts der Energieerzeugungsvorrichtung (4,6) kontrolliert wird.

3. Verfahren gemäß Anspruch 2, wobei automatisch zum Rückgewinnungsschritt der schweren Fraktion des Erdgases übergegangen und/oder ein Alarmsignal erzeugt wird, sofern die die Methanzahl kennzeichnende Variable des beförderten Erdgases eine Schwelle überschreitet.

4. Verfahren gemäß Anspruch 2 oder 3, wobei die die Methanzahl kennzeichnende Variable des beförderten Erdgases bestimmt wird durch den Durchfluss der leichten Fraktion des Erdgases, dem Phasenseparator (11 a, 11 b) nachgelagert, und/oder durch die Temperatur des verdampfenden Erdgases, welches im Tank gesammelt wird, und/oder durch das Niveau und/oder der Ablassfrequenz eines Kondensatsammelbehälters.

5. Ein auf einem Schiff eingebrachtes System zur Behandlung und Zufuhr von Erdgas ausgehend von einem Flüssiggaslagertank (2) zum Einem zu einer Energieerzeugungsvorrichtung (4,6) und zum Anderen zu einem Brenner (5) einer Energieerzeugungsanlage, wobei das System umfasst:
- einen ersten Versorgungskreislauf der Energieerzeugungsvorrichtung (4, 6), wobei der erste Kreislauf mit einem Phasenseparator (11 a, 11 b) ausgestattet ist, welcher nachgelagert verbunden ist zum Einen mit einer Rückleitung (12a, 12b), welche dazu geeignet ist, eine schweren Fraktion des Erdgases umfassend Kohlenwasserstoffe mit längstkettigen Kohlenstoffketten, in Form eines Kondensates zum Tank (2) zurückzuführen, und zum Anderen mit einer Zufuhrleitung (42) zur Energieerzeugungsanlage (4,6), welche dazu geeignet ist, eine leichte Fraktion des Erdgases, welche Kohlenwasserstoffe mit kürzestkettige Kohlenstoffketten umfasst, zu leiten, wobei das System **dadurch gekennzeichnet ist, dass** es umfasst:
- einen zweiten Versorgungskreislauf des Brenners (5), wobei der zweite Kreislauf den Phasenseparator (11 a, 11 b) kurzschließt.

6. System gemäß Anspruch 5, wobei der erste Kreislauf, dem Phasenseparator (11 b) vorgelagert, mindestens einen gemeinsamen Kreislaufteil mit dem ersten Kreislauf aufweist, derart angeordnet, dass eine verstärkte Verdampfung des Flüssiggases und/oder ein Sammeln des in dem Tank (2) verdampften Erdgases möglich ist.

7. System gemäß Anspruch 6, wobei ein Teil des gemeinsamen Kreislaufes des ersten und des zweiten Kreislaufes eine Saugleitung (7b) umfasst, welche in Richtung des unteren Endes des Tanks (2) mündet, ausgestattet mit einer Pumpe (8b) und einer Anlage zur verstärkten Verdunstung (9b), welche es ermöglicht, das Flüssiggas in einen gasförmigen Strom umzuwandeln.

8. System gemäß Anspruch 6 oder 7, wobei ein Teil des gemeinsamen Kreislaufs des ersten und des zweiten Kreislaufes eine Leitung (71), welche in den höheren Teil des Tanks mündet, umfasst, um das verdampfte Erdgas in dem Tank (2) zu sammeln.

9. System gemäß irgendeinem der Ansprüche 5 bis 8, wobei ein Teil des gemeinsamen Kreislaufs des ersten und des zweiten Kreislauf nachgelagert begrenzt ist durch ein schaltbares Drei-Wege-Verbindungsorgan (55; 155; 255-60; 160; 143; 243), welches es ermöglicht, wahlweise den gemeinsamen Teil des Kreislaufes mit einem Eingang des Phasenseparators (11 b) oder mit einem Teil des zweiten Kreislaufes, welcher zum Brenner (5) führt, zu verbinden.

10. System gemäß den Ansprüchen 5 bis 9, wobei der zweite Kreislauf zur Versorgung des Brenners (5) mit einer Heizanlage des Gases (57) ausgestattet ist.

11. System gemäß einem oder mehreren der Ansprüche 5 bis 10, wobei der erste Kreislauf zur Versorgung der Energieerzeugungsvorrichtung (4, 6) mit Erdgas einen nachgelagert zum Phasenseparator (11 b) angeordneten Kompressor (16a, 16b) umfasst.

12. System gemäß einem oder mehreren der Ansprüche 5 bis 11, umfassend eine Kontrollvorrichtung der repräsentativen Variablen des Methanindexes des beförderten Flüssiggases.

13. System gemäß Anspruch 12, wobei die Kontrollvorrichtung einer Variable, die die Methanzahl des beförderten Flüssiggas kennzeichnet, einen Sensor zur Messung des Durchflusses in der Zufuhrleitung (42) zu der Energieerzeugungsvorrichtung und/oder einen Sensor zur Messung der Temperatur des verdampften, in dem Tank (2) gesammelten, Erdgases und/oder einen Sensor zur Messung der Höhe in einem Kondensatsammelbehälter (72a, 72b) und/oder einen Zähler zur Messung der Ablassfrequenz eines Kondensatsammelbehälters (72a, 72b) umfasst.

14. System gemäß Anspruch 12 oder 13, wobei die Kontrollvorrichtung angeordnet ist, um eine Alarmsignal zu erzeugen und/oder auf ein schaltbares Drei-Wege-Verbindungsorgan (55; 155; 255-60; 160; 143; 243) einzuwirken, so dass das Erdgas zum Brenner (5) geleitet wird, sofern die die Methanzahl kennzeichnende Variable des beförderten Flüssiggas eine Schwelle überschreitet.

15. Schiff, umfassend einen Flüssiggaslagertank, eine Energieerzeugungsvorrichtung (4,6), eine mit einem Brenner ausgestattete Energieerzeugungsanlage und ein System zur Behandlung und Zufuhr von Erdgas gemäß irgendeinem der Ansprüche 5 bis 14.

16. Schiff gemäß Anspruch 15, wobei die Energieerzeugungsvorrichtung dazu bestimmt ist, den Antrieb des Schiffes zu gewährleisten.

17. Schiff gemäß einem der Ansprüche 15 oder 16, wobei der Flüssiggaslagertank ein Tank mit Membran ist.

18. Schiff gemäß irgendeinem der Ansprüche 15 bis 17, wobei der Tank ein Luftdrucklagertank ist.

19. Verfahren zur Befüllung eines Tanks eines Schiffes (1) gemäß irgendeinem der Ansprüche 15 bis 18, wobei eine Flüssigkeit durch isolierte Rohrleitungen (80) von einer schwimmenden oder erdverbundenen Speicheranlage (81) zu dem Tank (2) des Schiffes (1) geleitet wird.

20. Transfersystem für eine Flüssigkeit, wobei das System ein Schiff (1) gemäß irgendeinem der Ansprüche 15 bis 18 umfasst, wobei isolierte Rohrleitungen (80) so angeordnet sind, dass sie den in der Schiffshülle angeordneten Tank (2) mit einer schwimmenden oder erdverbunden Speicheranlage (81) verbinden, sowie eine Pumpe, die einen Strom von Flüssigkeit durch isolierte Rohrleitungen von der schwimmenden oder erdverbundenen Speicheranlage zu dem Tank des Schiffes leitet.

## Claims

1. A method for treating and conveying natural gas, in a ship (1), from a liquefied gas storage tank (2) to energy production equipment (4, 6), on the one hand, and to a burner (5) of an energy production installation, on the other hand, said method comprising:
- a step of supplying the energy production equipment (4, 6), during which step natural gas is carried through a phase separator (11 a, 11 b) allowing a heavy fraction of the natural gas containing the hydrocarbons that have the longest carbon chain to be returned to the tank (2) in the form of condensate and allowing a light fraction of the natural gas containing the hydrocarbons that have the shortest carbon chain to be carried to the energy production equipment (4, 6); the said method being **characterized in that** it comprises in succession to the step of supplying the energy production equipment
- a step of recovering the heavy fraction of the natural gas during which step natural gas is carried from the tank (2) to the burner (5), bypassing said phase separator (11 a, 11 b).

2. The method as claimed in claim 1, in which a variable indicative of the methane number of the natural gas being conveyed is monitored during the step of supplying the energy production equipment (4, 6).

3. The method as claimed in claim 2, in which there is an automatic switchover to the step of recovering the heavy fraction of the natural gas and/or an alarm signal is generated when the variable indicative of the methane number of the natural gas being conveyed crosses a threshold.

4. The method as claimed in claim 2 or 3, in which the variable indicative of the methane number of the natural gas being conveyed is determined by measuring the flow rate of the light fraction of the natural gas downstream of the phase separator (11 a, 11 b) and/or by measuring the temperature of the evaporated natural gas collected in the tank and/or by measuring the level and/or the purge frequency of a condensate collecting container.

5. A system carried onboard a ship (1), for treating and conveying natural gas from a liquefied gas storage tank (2) to energy production equipment (4, 6), on the one hand, and to a burner (5) of an energy production installation, on the other hand, the system comprising:
- a first supply circuit feeding the energy production equipment (4, 6), said first circuit being fitted with a phase separator (11 a, 11 b) connected, downstream, on the one hand, to a return pipe (12a, 12b) allowing a heavy fraction of the natural gas containing the hydrocarbons that have the longest carbon chain to be returned to the tank (2) in the form of condensate and, on the other hand, to a carrying pipe (42) leading to the energy production equipment (4, 6) conveying a light fraction of the natural gas containing the hydrocarbons that have the shortest carbon chain, the said system being **characterized in that** it comprises:
- a second supply circuit, feeding the burner (5), said second circuit bypassing said phase separator (11a, 11b).

6. The system as claimed in claim 5, in which the first circuit has, upstream of the phase separator (11 b), at least one circuit portion in common with the second circuit and designed to allow forced vaporization of the liquefied natural gas and/or to allow collection of the natural gas that has evaporated in the tank (2).

7. The system as claimed in claim 6, in which a circuit portion common to the first and to the second circuit comprises an intake pipeline (7b) opening toward the bottom of the tank (2), equipped with a pump (8b) and a forced vaporization installation (9b) allowing the liquefied natural gas to be converted into a stream of gas.

8. The system as claimed in claim 6 or 7, in which a circuit portion common to the first and to the second circuit comprises a pipeline (71) opening into the top part of the tank (2) to collect the natural gas that has evaporated in the tank (2).

9. The system as claimed in any one of claims 5 to 8, in which a circuit portion common to the first and to the second circuit is bounded downstream by a switchable three-way connection member (55; 155; 255-60; 160; 143; 243) allowing the circuit portion in common to be connected selectively to an inlet of the phase separator (11b) or to a portion of the second circuit leading to the burner (5).

10. The system as claimed in claims 5 to 9, in which the second circuit for feeding the burner (5) is fitted with a gas heating appliance (57).

11. The system as claimed in any one of claims 5 to 10, in which the first circuit for supplying natural gas to the energy production equipment (4, 6) comprises a compressor (16a, 16b) positioned downstream of the phase separator (11 b).

12. The system as claimed in any one of claims 5 to 11, comprising a device for monitoring a variable indicative of the methane number of the liquefied natural gas being carried.

13. The system as claimed in claim 12, in which the device for monitoring a variable indicative of the methane number of the liquefied natural gas being carried comprises a sensor for measuring the flow rate in the carrying pipe (42) leading toward the energy production equipment and/or a sensor for measuring the temperature of evaporated natural gas collected in the tank (2) and/or a sensor for measuring the level in a condensate collecting container (72a, 72b) and/or a counter for measuring the purge frequency of a condensate collection container (72a, 72b).

14. The system as claimed in claim 12 or 13, in which the monitoring device is designed to generate an alarm signal and/or to act on a switchable three-way connection member (55; 155; 255-60; 160; 143; 243) so as to lead the natural gas toward the burner (5) when the variable indicative of the methane number of the liquefied natural gas being carried crosses a threshold.

15. A ship comprising a liquefied gas storage tank, energy production equipment (4, 6), an energy production installation equipped with a burner and a system for treating and conveying the natural gas as claimed in any one of claims 5 to 14.

16. The ship as claimed in claim 15, in which the energy production equipment is intended for the propulsion of the ship.

17. The ship as claimed in claim 15 or 16, in which the liquefied gas storage tank is a tank with a membrane.

18. The ship as claimed in any one of claims 15 to 17, in which the tank is a storage tank at atmospheric pressure.

19. A method for filling a tank of a ship (1) as claimed in any one of claims 15 to 18, in which method a fluid is conveyed through insulated pipelines (80) from a floating or on-shore storage facility (81) toward the tank (2) of the ship (1).

20. A fluid transfer system, the system comprising a ship (1) as claimed in any one of claims 15 to 18, insulated pipelines (80) arranged in such a way as to connect the tank (2) installed in the hull of the ship to a floating or on-shore storage facility (81) and a pump for driving a stream of fluid through the insulated pipelines from the floating or on-shore storage facility to the tank of the ship.
